# EUROPÄISCHE PATENTSCHRIFT

(11) **EP 2 529 912 B1**
(45) Veröffentlichungstag und Bekanntmachung des Hinweises auf die Patenterteilung: **27.06.2018**
(21) Anmeldenummer: 12169818.7
(22) Anmeldetag: 29.05.2012
(51) Int. Cl.: B29C 45/00, B29C 45/14, B29C 45/16, B60K 35/00, B60K 37/06, H01H 13/70, B29L 31/34

(54) **Funktionsträger mit Tastenfunktionen**
Function carrier with button functions
Support fonctionnel avec fonctions de touches

(30) Priorität: 01.06.2011 CH 9342011
(43) Veröffentlichungstag der Anmeldung: 05.12.2012
(73) Patentinhaber: Abatek International AG, 8303 Bassersdorf (CH)
(72) Erfinder: Keist, Christoph, 9630 Wattwil (CH); Keiser, Swen, 5605 Dottikon (CH)
(74) Vertreter: Bremi, Tobias Hans

(56) Entgegenhaltungen:
- EP-A1- 2 269 795
- DE-A1-102004 013 819
- US-A1- 2008 223 702

## Beschreibung

### TECHNISCHES GEBIET

Die vorliegende Erfindung betrifft ein Verfahren zur Herstellung eines multifunktionalen Funktionsträgers, beispielsweise einer Konsolenstruktur für ein Fahrzeug oder ein Gerät, mit einer steifen Trägerstruktur, in welcher Bedienungselemente und/oder Anzeigeelemente hinter einer über im wesentlichen den gesamten Funktionsträger geschlossenen, transparenten Oberflächenschicht angeordnet sind. Des weiteren betrifft die Erfindung derart hergestellte Funktionsträger.

### STAND DER TECHNIK

Heute werden Bedienelemente und Anzeigegeräte sowie Tasten jeglicher Art im Automobil-Innenraum in Aussparungen einer grossen Blende integriert. Dadurch entstehen Spalte und Materialübergänge.

Die heute bekannten Lösungen lassen sich wie folgt zusammenfassen:
Folientästaturen mit Prägungen oder Lackauftrag: Folientastaturen erfüllen die Anforderungen von geschlossener Oberfläche und durch Prägungen oder selektiven Lack- oder Silikonauftrag von angeformten Tastengeometrien, sind jedoch immer auf eine flache Grundgeometrie beschränkt. Siehe z.B. DE 20 2005 012 021 U1.

Tiefgezogene Folie: Durch Tiefziehen können Folien auf eine dreidimensionale Form gebracht werden und auch Tastengeometrien können angeformt werden. Einschränkungen ergeben sich durch die notwendingen Biegeradien (keine scharfen Kanten möglich), den minimalen Abstand der Tasten (genügend Material für das Tiefziehen muss zwischen den Tasten vorhanden sein). Auch die funktionelle Betätigung einer solchen Taste ist nicht einfach zu realisieren, da die verformte Folie den Tastenhub mitmachen muss. Solche Folien neigen auch stark dazu, schnell zu brechen bei einem Betätigungsdauerlauftest.

Silikonoberfläche: Aus Silikon können frei geformte funktionelle Bedienoberflächen hergestellt werden. Diese Lösung zeichnet sich aus durch eine weiche Oberfläche und beschränkte Brillianz der Silikon-Farben. Aus diesem Grund wird diese Lösung gerade für grossflächige Anwendungen oftmals nicht gewählt.

Aus der EP 2 269 795 A1 A1 ist ein Verfahren zur Herstellung eines multifunktionalen Funktionsträgers mit einer steifen Trägerstruktur, in welcher Bedienungselemente hinter einer über im wesentlichen den gesamten Funktionsträger geschlossenen, transparenten Oberflächenschicht angeordnet sind bekannt. Das Verfahren weist die Schritte a) vorlegen einer flachen, flexiblen und wenigstens bereichsweise transparenten Kunststofffolie mit einer Dicke im Bereich von 0.2-0.5 mm; b) Beschichten der Folie auf der ersten Seite, wobei das Beschichten im wesentlichen vollflächig mit einer transparenten härtenden Vergussmasse in einem Reaktionsgießverfahren und unter Ausbildung einer geschlossenen transparenten Oberflächenschicht mit einer Dicke von 0.1 mm bis 2 mm ausgeführt wird, c) positionsgenaues Einlegen der flachen Kunststofffolie mit der Oberflächenschicht in eine mit einem korrespondierenden Positionierungsmittel versehene Spritzgussform und hinterspritzen der Kunststofffolie unter Ausbildung eines im Wesentlichen zusammenhängenden harten Kunststoffträgers auf der der Oberflächenschicht abgewandten zweiten Seite der Folie, wobei die Spritzgussform derart ausgestaltet ist, dass im Bereich der Bedienungselemente wenigstens bereichsweise die Kunststofffolie nicht hinterspritzt wird und freiliegend in Form von wenigstens zwei Aussparungen verbleibt so dass die Oberflächenschicht im Bereich der Aussparungen wenigstens bereichsweise flexible Bereiche ausbildet; d) einlegen von Bedienungselementen in die Aussparungen.

### DARSTELLUNG DER ERFINDUNG

Ziel dieser Erfindung ist es u.a., eine geschlossene dreidimensional geformte Blende mit integrierten Bedien- und/oder Anzeigeelementen aus einem hochwertig anmutenden Kunststoff herzustellen. Dabei haben die Bedienelemente / Tasten bevorzugtermassen ein taktiles Feedback, welches für die Bediensicherheit von zentraler Bedeutung ist.

Damit betrifft die vorliegende Erfindung zunächst ein Verfahren nach Anspruch 1 sowie einen entsprechend hergestellten multifunktionalen Funktiönsträger.

Konkret betrifft die Erfindung einerseits ein Verfahren zur Herstellung eines multifunktionalen Funktionsträgers mit einer steifen Trägerstruktur, in welcher Bedienungselemente und/oder Anzeigeelemente hinter einer über im wesentlichen den gesamten Funktionsträger geschlossenen, transparenten Oberflächenschicht angeordnet sind. Das Verfahren ist dabei insbesondere dadurch gekennzeichnet, dass wenigstens folgende Schritte durchlaufen werden:
i) eine flache, flexible und wenigstens bereichsweise transparente Kunststofffolie mit einer Dicke im Bereich von 0.05-0.4 oder 0.1-0.4 mm wird vorgelegt und in diese bevorzugtermassen ein Mittel zur Positionierung in einer Spritzgussform, beispielsweise in Form wenigstens eines Pösitionslochs, das in die Kunststofffolie gestanzt wird, eingebracht oder aufgebracht wird;
ii) die flache Kunststofffolie wird positionsgenau, zum Beispiel unter Verwendung des wenigstens einen Positionsloches (auch eine Vielzahl von derartigen Löchern ist möglich), in eine mit einem korrespondierenden Positionierungsmittel, beispielsweise in Form eines Elementes zum Eingriff in das wenigstens eine Positionsloch es kann sich aber auch um eine Spannvorrichtung handeln für die Folie, versehene Spritzgussform eingelegt, und die Kunststofffolie wird unter Ausbildung eines im wesentlichen zusammenhängenden harten Kunststoffträgers auf der ersten Seite hinterspritzt, wobei die Spritzgussform derart ausgestaltet ist, dass im Bereich der Bedienungselemente und/oder Anzeigeelemente wenigstens bereichsweise die Kunststofffolie nicht hinterspritzt wird und freiliegend in Form von wenigstens zwei Aussparungen verbleibt;
iii) auf der der ersten Seite abgewandten zweiten Seite wird die Kunststofffolie in der gleichen oder nach Übertragung des Rohlings in eine weitere Spritzgussform in dieser weiteren Spritzgussform im wesentlichen vollflächig mit einer transparenten härtenden (selbsthärtend, härtend in Anwesenheit von separatem Härter, und/oder wärmehärtend) Vergussmasse in einem RIM-Verfahren (Reaction injection moulding) überflutet und unter Ausbildung einer geschlossenen transparenten Oberflächenschicht mit einer Dicke von über im wesentlichen den gesamten Funktionsträger wenigstens 0.1 mm beschichtet wird, wobei sich im Bereich der Aussparungen wenigstens bereichsweise flexible Membranbereiche ausbilden (dabei ist es auch möglich, dass nach der Injektion der Vergussmasse die Form etwas weiter geschlossen wird, so dass eine sehr dünne Schicht aus Vergussmasse möglich ist);
iv) in die Aussparungen werden Bedienungselemente und/oder Anzeigeelemente eingelegt und mit dem Kunststoffträger verbunden.

Eine erste bevorzugte Ausführungsform dieses Verfahrens ist dadurch gekennzeichnet, dass die Kunststofffolie vor, während oder nach Schritt i), vorzugsweise auf der ersten und/oder der zweiten Seite, bedruckt und/oder dekoriert wird, vorzugsweise in einem Siebdruckverfahren, einem Laserdruckverfahren, einem Stempeldruckverfahren, einem Spraydruckverfahren, einem Offsetdruckverfahren oder einen Digitaldruckverfahren. Alternativ oder zusätzlich ist es gemäß einer weiteren bevorzugten Ausführungsform möglich, nach Schritt ii) den Rohling wenigstens bereichsweise zu bedrucken, vorzugsweise unter Verwendung eines der oben genannten Verfahren, und/oder zu dekorieren. Alternativ ist es möglich, den Rohling einer Laserbeschriftung zu unterziehen. Die Beschriftung in dieser Phase des Herstellungsverfahrens ist insbesondere dann vorteilhaft, wenn im Rahmen des Hinterspritzens nicht sichergestellt werden kann, dass die Folienposition exakt genau über den zukünftigen Positionen der Schaltelemente/Displayelemente angeordnet ist.

Eine weitere bevorzugte Ausführungsform ist dadurch gekennzeichnet, dass die Kunststofffolie durch den Schritt ii) wenigstens bereichsweise in eine dreidimensionale Oberflächenform übergeführt und in dieser stabilisiert wird. Mit anderen Worten kann im Rahmen des Schrittes ii) die Folie entweder in ihrer Flachlage verbleiben, sie kann aber auch entweder durch ihre Einlage in die Spritzgussform in einer entsprechend geformten Weise oder durch den eigentlichen Prozess des Hinterspritzens in eine dreidimensionale Oberflächenform gebracht werden.

Bevorzugtermassen handelt es sich beim Bedienungselement um wenigstens einen Schalter mit taktiler Rückmeldung.

Eine weitere bevorzugte Ausführungsform ist dadurch gekennzeichnet, dass es sich beim Anzeigeelement um ein LCD-Display, vorzugsweise um ein (resistives oder kapazitives) berührungsempfindliches Display handelt.

Eine weitere bevorzugte Ausführungsform ist dadurch gekennzeichnet, dass der Funktionsträger sowohl wenigstens ein Bedienungselement in Form eines Schalters mit taktiler Rückmeldung als auch wenigstens ein Anzeigeelement, vorzugsweise ein resistives oder kapazitives berührungsempfindliches Anzeigeelement, aufweist.

Eine weitere bevorzugte Ausführungsform ist dadurch gekennzeichnet, dass es sich bei der Kunststofffolie um eine Kunststofffolie aus TPU (thermoplastische Polyurethan-Elastomere) oder aus Polyamid handelt, vorzugsweise aus Polyamid 6 oder Polyamid 12.

Eine weitere bevorzugte Ausführungsform ist dadurch gekennzeichnet, dass es sich bei der Vergussmasse zur Bildung der Oberflächenschicht um ein transparentes, in Anwesenheit eines Härters, selbsthärtendes und/oder wärmehärtendes Polyurethanharz handelt, wobei dieses wenigstens im Bereich der Bedienungselemente und der wenigstens teilweise darum herum angeordneten Membranbereiche eine Dicke von nicht mehr als 0.4 mm aufweist, und wobei vorzugsweise in diesen Bereichen die Oberflächenschicht eine Dicke von wenigstens 0.2 mm aufweist.

Des weiteren betrifft die vorliegende Erfindung auch einen multifunktionalen Funktionsträger mit wenigstens einem Bedienungselement und vorzugsweise wenigstens einem Anzeigeelement, gekennzeichnet durch eine mit einem zusammenhängenden harten Kunststoffträger bis auf wenigstens zwei Aussparungen auf einer ersten Seite direkt und unmittelbar hinterspritzte Kunststofffolie einer Dicke im Bereich von 0.05-0.4 oder 0.1-0.4 mm, die auf der gegenüberliegenden zweiten Seite eine unmittelbare, im wesentlichen geschlossene transparente Oberflächenschicht aus einer gehärteten Vergussmasse aufweist.

Dabei ist in wenigstens einer der Aussparungen wenigstens ein Bedienungselement in Form eines Schalters, vorzugsweise mit taktiler Rückmeldung, angeordnet, um welchen herum ein wenigstens teilweise umlaufender flexibler Membranbereich zur Ermöglichung des Tastenhubs vorhanden ist, bei welchem der flexible Schichtaufbau nur aus aus gegebenenfalls bedruckter Kunststofffolie und Oberflächenschicht besteht. Der erfindungsgemäße Funktionsträger ist dadurch gekennzeichnet, dass er in einem Verfahren, wie es oben geschildert worden ist, hergestellt ist.

Eine weitere bevorzugte Ausführungsform des Funktionsträgers ist gekennzeichnet, dass er zudem wenigstens ein Anzeigeelement aufweist, und dass das wenigstens eine Bedienungselement und das wenigstens eine Anzeigeelement bevorzugt auf einer gemeinsamen Leiterplatte befestigt sind, welche am harten Kunststoffträger insbesondere bevorzugtermassen befestigt ist. Dabei sind vorzugsweise sämtliche Bedienungselemente und Anzeigeelemente des gesamten Funktionsträgers auf einer einzigen gemeinsamen Leiterplatte angeordnet.

Gemäß einer weiteren bevorzugten Ausführungsform sind auf der Oberfläche, insbesondere in den Bereichen der Bedienungselemente über die Oberfläche wenigstens teilweise hervorstehende Bereiche aus der Vergussmasse ausgebildet. In den genannten Membranbereichen verbleiben aber die oben angegebenen Dicken der Oberflächenschicht, um die genügende Beweglichkeit für die taktile Rückmeldung bei den Schaltern zu gewährleisten.

Der Hartkunststoffträger und/oder die Leiterplatte, auf welcher Bedienungselemente und/oder Anzeigeelemente angeordnet sind können Lichtleiter, Lichtquellen, und/oder Lichtabschirmungen aufweisen.

Bei einem solchen Funktionsträger kann es sich um ein integrales oder einen Teil eines Konsolenelements für ein Fahrzeug, um ein Lenkrad für ein Fahrzeug, um eine Medizinalvorrichtung, um eine Computermaus, um eine Spielkonsole oder um eine Oberfläche für ein Mobiltelefon oder ein Tischtelefon handeln.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: einen schematischen Schnitt durch einen Funktionsträger nach der Erfindung, zum Beispiel entlang der Linie A-A einer Konstruktion gemäß Figur 3;
- Fig. 2: eine Darstellung der einzelnen Verfahrensschritte des vorgeschlagenen Verfahrens; und
- Fig. 3: ein Beispiel einer Blende einer Automobil-Mittelkonsole.

### BESCHREIBUNG BEVORZUGTER AUSFÜHRUNGSFORMEN

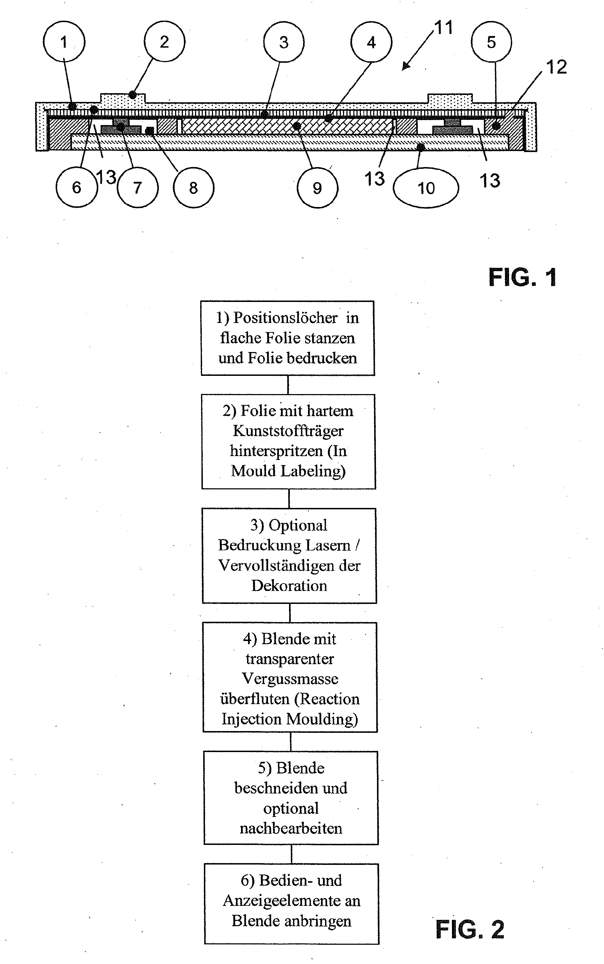

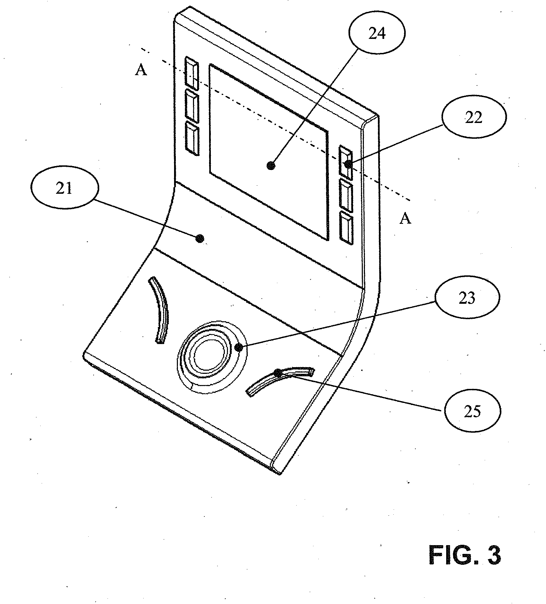

Fig. 3 zeigt ein Beispiel einer Blende einer Automobil-Mittelkonsole, Fig. 1 zeigt einen schematischen Schnitt durch einen solchen Funktionsträger nach der Erfindung entlang der Linie A-A einer Konstruktion gemäß Figur 3, und Fig. 2 eine Darstellung der einzelnen Verfahrensschritte des vorgeschlagenen Verfahrens. Die einzelnen Schritte dieses Verfahrens sollen nun wie folgt erläutert werden:
Schritt 1 aus Figur 2: In eine weiche Folie 3 (z.B. TPU 200um Dicke) werden umlaufend Positionslöcher 12 gestanzt. Die Stanzung ist dabei nicht zwingend notwendig, die Folie kann auch in der Spritzgussform zur genauen Positionierung beispielsweise aufgespannt werden. Dann wird die Folie 3 auf der Vorder- und/oder oder Rückseite bedruckt und dekoriert. In der Schnittdarstellung gemäss Figur 1 ist auch im fertigen Bauteil 11 ein Positionsloch 12 noch vorhanden, dies an einer Stelle, wo es z.B. unproblematisch ist, dass dieses Loch 12 dann durch das harte Material des Bereichs 5 gefüllt wird, oder es wird der Bereich in der Form so hinterlegt, dass nicht mit Material des harten Trägers 5 gefüllt wird aber dann im Rahmen von Schritt 4 in Fig, 2 das Loch 12 mit Vergussmasse gefüllt wird. Häufig sind solche Positionierungshilfen aber spezifisch am Rand der Folie 3 angeordnet, und zwar in einer Weise, dass dann das Positionsloch 12 oder die Positionslöcher 12 im Rahmen der Nachbearbeitung (Schritt 5 nach Figur 2) entfernt werden und im fertigen Bauteil nicht mehr enthalten sind.

Die Folie 3 wird im Rahmen des Schrittes 2 aus Figur 2 dann an den Positionierlöchern 12 in das Spritzgusswerkzeug eingelegt und ein harter Kunststoffträger 5 hinterspritzt. Beim Material dieses Kunststoffträgers 5 kann es sich um Polyamid, Polycarbonat oder auch ABS handeln. In den Bereichen der Bedien- und Anzeigeelemente wird die Folie 3 nicht hinterspritzt, d.h. es verbleiben für diese Aussparungen 13, und die Schichtkonstruktion aus Folie 3 und Oberflächenschicht 2 bildet dort eine flexible und elastische Haut im Sinne einer Membran 6.

Die Folie 3 auf dem Kunststoffträger 5 kann dann im Rahmen des Schrittes 3 aus Figur 2 nochmals (oder erstmals) dekoriert werden, z.B. können Symbole positionsgenau aus der Bedruckung gelasert werden oder andere Elemente können aufgedruckt werden z.B. im Tampondruckverfahren.

In einem nächsten Schritt gemäß Ziffer vier aus Figur 2 wird der Kunststoffträger 5 mit Folie 3 in einem Werkzeug positioniert, das Werkzeug geschlossen, wobei zwischen Folienoberseite und Werkzeug ein Spalt von mindestens 0.1mm verbleibt. Dieser Spalt wird typischerweise unter Hochdruck (Niederdruckverfahren auch möglich) mit einer reaktiven PUR Vergussmasse gefüllt, d.h. auf einer PUR Hochdruckanlage mit klarem, d.h. im wesentlichen transparentem oder wenigstens durchscheinendem Polyurethan. Nachdem das Polyurethan ausgehärtet ist (zusätzlich ist Wärmeeintrag möglich), wird bevorzugtermassen die Blende noch nachgearbeitet werden z.B. beschnitten (umlaufende Folie und Anguss etc) und evt. noch poliert. Dann können von hinten Bedien- 7 und Anzeigeelemente 9 montiert werden, wobei dies bevorzugtermassen so erfolgt, dass eine Leiterplatte 10 mit auf diesen montierten Elemente 7 und 9 von hinten eingeschoben und an der Struktur 5 befestigt wird.

Transparente Vergussmasse 1 mit angeformten Tastenerhebungen 2 oder Zierelementen: Die Vergussmasse für die Erstellung der Oberflächenschicht 1 ist der wichtigste Werkstoff dieser Erfindung. Sie dient zum einen dazu, eine im wesentlichen beliebige dreidimensionale Oberflächenstruktur zu generieren (Abbild der Werkzeugoberfläche). Zum anderen können mit der Vergussmasse wesentlichen beliebige Strukturen auf der Oberfläche angebracht werden wie Tastenformen oder Zierstege etc,. Typischerwiese geschieht dies innerhalb einer minimalen Dicke an der dünnsten Stelle von 0.1 - 2.0 mm. Diese Öberflächenschicht 1 kann durchgehend über die ganze Oberfläche sein oder auch nur in Teilbereichen. Die Oberflächenschicht 1 hat folgende Eigenschaften:
- elastisch um im dünnen Membranbereich 6 eine Betätigung der Tasten 2/7 zu ermöglichen;
- fest im dicken Tastenbereich 2 um ein hartes Gefühl zu geben;
- transparent im Rahmen der aufgetragenen Dicke, um Dekoration sichtbar zu machen;
- gute Haftung auf Folie;
- gute Abriegbeständigkeit;
- hohe Kratzfestigkeit;
- kein Vergilben, auch nicht unter starker Sonneneinstrahlung;
- geruchsneutral und emissionsfrei

Die Vergussmasse hat im Membranbereich 6 der Tasten normalerweise eine Dicke von 0.1mm bis 0.3mm, um die Betätigung der Taste mit taktiler Rückmeldung zu ermöglichen. In den anderen Bereichen fühlt sich die Oberfläche hart an wegen der harten Kunststoffhinterspritzung 5, der harten dahinterliegenden Displayelemente 9, oder der dicken Tastenbereiche 2.

Die Härte der Vergussmasse kann durch das Mischungsverhältnis von Härter zu Lack eingestellt werden. Normalerweise wird bevorzugt, dass die Härte im Bereich von 70-100 Shore A liegt, oder im Bereich von 80 - 100 Shore D, bevorzugt 80 - 85 Shore D. Insbesondere bevorzugt im Bereich von 80 Shore A

Diese Membrane 6 im Tastenbereich ermöglicht eine taktile Rückmeldung der Tasten 7 und das bei einer über das gesamte Bauteil geschlossenen 3-dimensionalen Oberfläche 1. Als hervorragend geeignetes Vergussmassen-Material hat sich Polyurethan bewährt. Das Polyurethan wird mittels Hoch- oder Niederdruck Reaction Injection Moulding (RIM) auf die Blende aufgebracht, wobei sich automatisch eine innige Verbindung zwischen der Kunststofffolie 3 und der Oberflächenschicht 2 ausbildet. Dabei gibt es 3 mögliche Vorgehensweisen:
1. direkt nach dem Hinterspritzen auf der gleichen Maschine in zweiter Form mit Vergussmasse Überfluten, Vorteil ist, dass die Blende bereits sauber positioniert ist.
2. als separaten Schritt Blende in ein RIM Werkzeug einlegen, wo dann der Spalt für den Oberflächenüberzug und die Tasten, Zierstege etc mit Polyurethan unter Ausbildung der Oberflächenschicht 1/2 überflutet werden. Minimale Schichtdicke ist 200um, um die Form füllen zu können
3. wie 2. aber nach dem Füllen der Form wird noch mittels einem Prägedruck die Schichtdicke weiter reduziert auf 100um (0.1mm).

Es kann ein Formtrennmittel vorteilhaft sein.

Nach dem Überfluten wird bevorzugtermassen die Blende nachbearbeitet zum Beispiel zugeschnitten (Folie und Anguss). Allenfalls muss der transparente Vergussmasse auch noch nachpoliert werden.

Kunststofffolie 3: Die Folie sollte folgende Eigenschaften aufweisen:
- verformbar und hinterspritzbar;
- flexibel und weich, um die Tastenfunktion (Hub) zu gewährleisten;
- bedruckbar für Dekoration;
- transparent für Hinterleuchtung und Anzeigeelemente / Displaybereiche;
- gute (nachhaltige) Haftung zu Oberflächenschicht;
- gute (nachhaltige) Haftung zur harten Trägerstruktur

Die Folie 3 besteht bevorzugt aus einer 50 - 300um dicken TPU Folie. Dabei kann das TPU aliphatisch oder nicht-aliphatisch sein. 200um ist eine bevorzugte Dicke.

Die Härte der Folie 3 ist bevorzugtermassen ähnlich wie bei der Vergussmasse im Bereich von 70-100 Shore A, oder 80 - 100 Shore D, bevorzugt 80 - 85 Shore D. Insbesondere bevorzugt im Bereich von 80 Shore A.

Um eine bessere Haftung gegenüber der Hinterspritzung 5 zu erzielen, kann die Folie 3 mit Alkohol gereinigt, mit Plasma, Corona oder Flamme vorbehandelt werden oder eine coextrudierte Olefinschicht enthalten.

Alternativ sind auch andere Materialien denkbar wie Polyamid PA oder TPE etc
Dekoration 4: Die Folie 3 kann auf der Vorder- oder auf der Rückseite bedruckt werden (zum Beispiel Siebdruck). Symbole können bereits auf der Folie aufgebracht werden. Allerdings kann es beim Hinterspritzen der weichen Folie 3 zu unkontrollierbarem Verzug der Symbole und deren Position kommen, sodass folgendes Vorgehen bevorzugt wird:
1. Bedrucken der Folie auf der Vorderseite mit Symbolfarben (z.B. weiss);
2. Bedrucken der Folie mit Oberflächenfarbe (z.B. schwarz);
3. Hinterspritzen der bedruckten Folie;
4. Lasern der Symbole am Hinterspritzen Bauteil, dadurch stimmen Geometrie und Position.

Das Verfahren kann auch mit auf der Rückseite bedruckter Folie 3 angewendet werden, allerdings wird dann nur mit Oberflächenfarbe bedruckt und die Symbole von hinten gelasert und allenfalls noch mit Symbolfarbe im Tampondruck gefüllt.

Harter Kunststoffträger 5: Der Träger 5 muss folgende Funktionen erfüllen:
1. feste Basis für Folie 3, um in den Bereichen ohne Tasten eine möglichst harte und feste Oberfläche zu erzeugen;
2. gute Haftung zur Folie 3;
3. offene Fenster im Bereich der flexiblen Membrane 6;
4. offene Fenster im Bereich der Anzeigeelemente /Displays 9 ausser es wird ein transparentes Material verwendet oder ein Zweikomponenten-Verfahren mit einer transparenten Komponente;
5. Befestigungsmöglichkeiten für Bedien- und Anzeigekomponenten respektive einer Leiterplatte 10 mit diesen Elementen auf der Rückseite;
6. Befestigungsmöglichkeiten zur Integration der Blende in das Fahrzeug / Gerät.

Zum Hinterspritzen der TPU Folie 3 wird bevorzugt ABS/PC Kunststoff verwendet, es können aber auch PA6 oder ABS/PA oder ähnliche Systeme eingesetzt werden.

Die Wandstärke ist wesentlichen abhängig von der Bauteilgrösse und der Einbautiefe.

Flexibler Membranbereich ohne Kunststoffhinterspritzung 6: Um bei den Bedienelementen 7 eine taktile Rückmeldung zu ermöglichen oder ein resistives Display 9 zu betätigen, wird eine Membrane 6 benötigt. Diese Membrane 6 besteht nur aus der dekorierten Folie 3 und der Vergussmasse der Oberflächenschicht 1. Die Dicke der Membrane 6 ergibt sich aus der Dicke der Folie 3 und der Dicke der Vergussmasse der Oberflächenschicht 1 im MembranBereich. Diese Gesammtdicke sollte 600um nicht überschreiten, weil sonst normalerweise kein scharfes taktiles Schaltgefühl mehr möglich ist.

In diesem Membranbereich 6 ist die Folie 3 nicht hinterspritzt (Fenster/Aussparung).

Die Länge der Membrane (Abstand Rand der angeformten Taste 2 zur Hinterspritzung 5) sollte im Bereich von 2-10 mm, vorzugsweise im Bereich von 4-6 mm, typischerweise ca. 5 mm betragen, ist aber abhängig von der Tastengeometrie und dem zu erzielenden Schaltgefühl.

Mikroschalter / Schnappscheiben 7: Um eine taktile Rückmeldung der Tastenbetätigung zu erhalten, wird ein Mikroschalter 7 oder eine Schnappscheibe unter der Taste 2 angebracht. Betätigungskraft und Snap kann durch Auswahl der Schnappscheibe beinflusst werden.

Es ist einer der ganz grossen Vorteile und Alleinstellungsmerkmale dieser Erfindung, dass ein taktiles Tastengefühl in einer geschlossenen Blendenoberfläche erzeugt werden kann. Es sind aber auch resistive (Silikonschaltmatte anstelle Mikroschalter) und kapazitive Tasten realisierbar oder die Kombination von diesen Technologien.

Hinterleuchtung 8: Die Hinterleuchtung der Tasten oder Ausleuchtung einzelner Flächen oder Funktionsbeleuchtung kann mittles normalen LEDs und oder Lichtleitern realisiert werden. Es ist aber auch möglich, bei flachen Strukturen eine Lichtleitfolie oder EL Folien zu verwenden.

Anzeigeelemente / Displays 9: Displays können an dem Kunststoffträger befestigt werden. Es ist möglich dank der dünnen und flexiblen Schicht 1/3 über dem Display 9 auch resistive Touscreens einzusetzen sowie auch kapazitive Touchscreens.

Leiterplatte 10: Die Leiterplatte dient als Aufnahme für die Bedien- 7 und Anzeigeelemente 9. Dabei kann eine starre, flexible oder Starr-flex Leiterplatte 10 eingesetzt werden. Bei extremen Oberflächenwölbungen sind auch 3D MID Technologie und ähnliches möglich.

Die Leiterplatte 10 kann mittels Schrauben, kleben, oder Snapp-on Verbindungen an der Kunstoffhinterspritzung direkt an der Blende befestigt werden.

Generelle Vorteile eines Optionsbauteils nach der Erfindung:
Eine dreidimensional geschwungene Blende wird zur Verfügung gestellt mit
- geschlossener Oberfläche ohne Spalten
- hochwertiger und aufgeräumter Anmutung
- integrierten Bedien- und Anzeigeelementen
- Tasten mit taktilem Feedback
- Touchdisplays resistiv und kapazitiv möglich
- kapazitive Elemente über printed electronics möglich
- Tasten und Zierelementen in fast beliebiger Form
- Vielzahl von möglichen Oberflächenstrukturen (matt / glänzend)
- flachem Aufbau
- reduzierten Bauteilen

Anwendungen (Beispiele):
- Mittelkonsole von Autos mit integrierten Tasten und Displays
- Lenkrad mit integrierten Tasten
- Türblende mit integrierten Tasten
- Medizinalgeräte
- Computer-Maus
- Spielkonsolen
- Tastatur jeglicher Art zb.für Mobiltelefone und Tischtelefone
- Hand held devices jeglicher Art
- Abdeckungen für Haushaltgeräte

Entsprechend betrifft die Erfindung eine Blende aus einer hinterspritzen Folie welche auf der Oberseite mit einer klaren Vergussmasse zumindest teilweise, bevorzugt gesamthaft überzogen ist. In diese Blende sind Bedien- und Anzeigelemente integriert. Zudem weist die Oberflächenschicht zusätzlich angeformte Strukturen auf. Bei den Bedienelementen handelt es sich um Tasten mit einem taktilen Feedback. Bei den Anzeigeelementen kann es sich um resistive oder kapazitive Touchdisplays handeln. Die Blende umfasst eine hinterspritzte und dekorierte weichen TPU Folie, welche im RIM Verfahren mit Polyurethan überflutet ist. Auf der Unterseite der Tasten sind Schnappscheiben oder Kontaktpillen vorgesehen, die eine Tastenhaptik erzeugen und elektrischen Kontakt geben. Der Träger weist eine um die Tastengeometrie umlaufende Aussparung auf, um den Tastenhub zu ermöglichen. Auf der Unterseite der Tasten kann ein Mikroschalter oder eine andere Kontakttechnologie eingesetzt werden. Der Träger kann Lichtleiter oder Lichtabschirmungen aufweisen, um Funktionsbeleuchtungen zu realisieren. Die Oberflächenschicht kann im wesentlichen in beliebiger Dicke, Form und Struktur aufgebracht sein, sie kann als geschlossene Fläche vorgesehen sein oder nur in einzelnen Bereichen, dann aber wenigstens im Bereich der Funktionselemente und diese vollständig ohne Spalte überdeckend. Typischerweise wird gesammte Oberfläche mit einer transparenten Oberflächenschicht im Sinne einer Schutzschicht versehen, z.B. um Kratzfestigkeit zu erhöhen. In die Oberfläche kann eine Linsenstruktur eingebracht sein, um optische Linseneffekte zu erzielen.

**BEZUGSEICHELISTE**

| | | | |
|---|---|---|---|
| 1 | geschlossene transparente Vergussmasse über gesamte Blende, flexibel in dünnen Bereichen | 9 | Anzeigeelement / Display |
| | | 10 | Leiterplatte |
| | | 11 | Funktionsträger |
| | | 12 | Positionsloch |
| 2 | angeformte Taste aus transparenter Vergussmasse | 13 | Aussparung in 5 |
| 3 | flexible und wengistens bereichsweise transparente Folie | 21 | Oberfläche mit transparenter Vergussmasse überflutet |
| | | 22 | angeformte Tastenstrukturen aus transparenter Vergussmasse;Tasten mit taktiler Rückmeldung bei Betätigung. |
| 4 | Bedruckung / Dekorationsschicht auf Folie aufgebracht | | |
| 5 | harter Kunststoffträger an | | |
| | Folie hinterspritzt, Trägerstruktur | 23 | angeformte Joystickstur aus transparenter Vergussmasse |
| 6 | flexibler Membranbereich ohne Kunststoffhinterspritzung | 24 | Anzeigeelemente / Display hinter transparenter Vergussmasse, z.B. Touchdisplays |
| 7 | Mikroschalter / Schnappscheibe für Tastenfunktion | | |
| | | 25 | Zierelemente aus transparenter Vergussmasse |
| 8 | LED für Hinterleuchtung | | |

## Patentansprüche

1. Verfahren zur Herstellung eines multifunktionalen Funktionsträgers (11) mit einer steifen Trägerstruktur (5), in welcher Bedienungselemente (7) und/oder Anzeigeelemente (9) hinter einer über im wesentlichen den gesamten Funktionsträger geschlossenen, transparenten Oberflächenschicht (1) angeordnet sind, wobei
i) eine flache, flexible und wenigstens bereichsweise transparente Kunststofffolie (3) mit einer Dicke im Bereich von 0.05-0.4 mm vorgelegt und in diese optional wenigstens ein Positionsloch (12) gestanzt wird;
ii) die flache Kunststofffolie (3) positionsgenau, vorzugsweise unter Verwendung des wenigstens einen Positionsloches (12), in eine mit einem korrespondierenden Positionierungsmittel, vorzugsweise zum Eingriff in das Positionsloch (12), versehene Spritzgussform eingelegt wird, und die Kunststofffolie (3) unter Ausbildung eines im wesentlichen zusammenhängenden die steife Trägerstruktur bildenden harten Kunststoffträgers (5) auf der ersten Seite hinterspritzt wird, wobei die Spritzgussform derart ausgestaltet ist, dass im Bereich der Bedienungselemente (7) und/oder Anzeigeelemente (9) wenigstens bereichsweise die Kunststofffolie (3) nicht hinterspritzt wird und freiliegend in Form von wenigstens zwei Aussparungen (13) verbleibt;
iii) auf der der ersten Seite abgewandten zweiten Seite die Kunststofffolie (3) in der gleichen oder nach Übertragung des Rohlings in eine weitere Spritzgussform in dieser weiteren Spritzgussform im wesentlichen vollflächig mit einer transparenten härtenden Vergussmasse in einem RIM-Verfahren überflutet und unter Ausbildung einer geschlossenen transparenten Oberflächenschicht (1) mit einer Dicke von über im wesentlichen den gesamten Funktionsträger (11) wenigstens 0.1 mm beschichtet wird, wobei sich im Bereich der Aussparungen (13) wenigstens bereichsweise flexible Membranbereiche (6) ausbilden;
iv) in die Aussparungen (13) Bedienungselemente (7) und/oder Anzeigeelemente (9) eingelegt und mit dem Kunststoffträger (5) verbunden werden.

2. Verfahren nach Anspruch 1, **dadurch gekennzeichnet, dass** die Kunststofffolie (3) vor oder nach Schritt i), vorzugsweise auf der ersten und/oder der zweiten Seite, bedruckt und/oder dekoriert wird, vorzugsweise in einem Siebdruckverfahren, einem Laserdruckverfahren, einem Stempeldruckverfahren, einem Spraydruckverfahren, einem Offsetdruckverfahren oder einen Digitaldruckverfahren.

3. Verfahren nach einem der vorhergehenden Ansprüche, **dadurch gekennzeichnet, dass** die Kunststofffolie (3) durch den Schritt ii) wenigstens bereichsweise in eine dreidimensionale Oberflächenform übergeführt und in dieser stabilisiert wird.

4. Verfahren nach einem der vorhergehenden Ansprüche, **dadurch gekennzeichnet, dass** es sich beim Bedienungselement (7) um einen Schalter mit taktiler Rückmeldung handelt.

5. Verfahren nach einem der vorhergehenden Ansprüche, **dadurch gekennzeichnet, dass** es sich beim Anzeigeelement (9) um ein LCD-Display, vorzugsweise um ein berührungsempfindliches Display handelt.

6. Verfahren nach einem der vorhergehenden Ansprüche, **dadurch gekennzeichnet, dass** der Funktionsträger (11) sowohl wenigstens ein Bedienungselement (7) in Form eines Schalters mit taktiler Rückmeldung als auch wenigstens ein Anzeigeelement (9), vorzugsweise ein resistives oder kapazitives berührungsempfindliches Anzeigeelement, aufweist.

7. Verfahren nach einem der vorhergehenden Ansprüche, **dadurch gekennzeichnet, dass** es sich bei der Kunststofffolie (3) um eine Kunststofffolie aus TPU oder aus Polyamid handelt, vorzugsweise aus Polyamid 6 oder Polyamid 12.

8. Verfahren nach einem der vorhergehenden Ansprüche, **dadurch gekennzeichnet, dass** es sich bei der Vergussmasse zur Bildung der Oberflächenschicht (1) um ein transparentes, selbsthärtendes und/oder wärmehärtendes Polyurethanharz handelt, wobei dieses wenigstens im Bereich der Bedienungselemente (7) und der wenigstens teilweise darum herum angeordneten Membranbereiche (6) eine Dicke von nicht mehr als 0.4 mm aufweist, und wobei vorzugsweise in diesen Bereichen die Oberflächenschicht (1) eine Dicke von wenigstens 0.1 mm oder wenigstens 0.2 mm aufweist.

9. Verfahren nach einem der vorhergehenden Ansprüche, **dadurch gekennzeichnet, dass** nach Schritt ii) der Rohling wenigstens bereichsweise bedruckt, vorzugsweise unter Verwendung eines Verfahrens nach Anspruch 2, und/oder dekoriert und/oder einer Laserbeschriftung unterzogen wird.

10. Multifunktionaler Funktionsträger (11) hergestellt in einem Verfahren gemäß einem der Ansprüche 1 - 9 mit wenigstens einem Bedienungselement (7) und vorzugsweise wenigstens einem Anzeigeelement (9) **gekennzeichnet durch** eine mit einem zusammenhängenden harten Kunststoffträger (5) bis auf wenigstens zwei Aussparungen (13) auf einer ersten Seite direkt und unmittelbar hinterspritzte Kunststofffolie (3) einer Dicke im Bereich von 0.05-0.4 mm, die auf der gegenüberliegenden zweiten Seite eine unmittelbare, im wesentlichen geschlossene transparente Oberflächenschicht (1) aus einer gehärteten Vergussmasse aufweist, wobei in wenigstens einer der Aussparungen (13) wenigstens ein Bedienungselement (7) in Form eines Schalters (7) mit taktiler Rückmeldung angeordnet ist, um welchen herum ein wenigstens teilweise umlaufender flexibler Membranbereich (6) zur Ermöglichung des Tastenhubs vorhanden ist, bei welchem der flexible Schichtaufbau nur aus aus gegebenenfalls bedruckter Kunststofffolie (3) und Oberflächenschicht (1) besteht.

11. Funktionsträger (11) nach Anspruch 10, **dadurch gekennzeichnet, dass** er wenigstens ein Anzeigeelement (9) aufweist, und dass das wenigstens eine Bedienungselement (7) und das wenigstens eine Anzeigeelement (9) auf einer gemeinsamen Leiterplatte (10) befestigt sind, welche am harten Kunststoffträger (5) befestigt ist, wobei vorzugsweise sämtliche Bedienungselement (7) und Anzeigeelemente (9) des gesamten Funktionsträgers (1) auf einer einzigen gemeinsamen Leiterplatte (10) angeordnet sind.

12. Funktionsträger (11) nach einem der vorhergehenden Ansprüche 10-11, **dadurch gekennzeichnet, dass** auf der Oberfläche, insbesondere in den Bereichen der Bedienungselemente (7) über die Oberfläche wenigstens teilweise hervorstehende Bereiche (2) aus der Vergussmasse ausgebildet sind.

13. Funktionsträger (11) nach einem der vorhergehenden Ansprüche 10-12, **dadurch gekennzeichnet, dass** der Hartkunststoff Träger (5) und/oder eine Leiterplatte, auf welcher Bedienungselemente (7) und/oder Anzeigeelemente (9) angeordnet sind Lichtleiter, Lichtquellen, und/oder Lichtabschirmungen aufweist.

14. Funktionsträger (11) nach einem der vorhergehenden Ansprüche 10-13, **dadurch gekennzeichnet, dass** es sich um ein Konsolenelement für ein Fahrzeug, um ein Lenkrad für ein Fahrzeug, um eine Medizinalvorrichtung, um eine Computermaus, um eine Spielkonsole oder um eine Oberfläche für ein Mobiltelefon oder ein Tischtelefon handelt.

## Claims

1. Method of producing a multifunctional functional unit (11) with a rigid support structure (5), in which control elements (7) and/or display elements (9) are arranged behind a transparent surface layer (1) which is continuous over substantially the entire functional unit, **characterized in that**
i) a flat, flexible and at least in places transparent plastics film (3) with a thickness in the range from 0.05-0.4 mm is initially introduced and into this at least one positioning hole (12) is optionally punched;
ii) the flat plastics film (3) is introduced in a precisely positioned manner, preferably using the at least one positioning hole (12), into an injection mould provided with a corresponding positioning means, preferably for engaging in the positioning hole (12), and the plastics film (3) is back-injected, to form a substantially continuous hard plastics support (5) on the first side, the injection mould being designed such that, in the region of the control elements (7) and/or display elements (9), the plastics film (3) is not back-injected at least in places and remains bare in the form of at least two recesses (13);
iii) on the second side remote from the first side, the plastics film (3) is flooded in the same injection mould or, after transfer of the blank into a further injection mould, in this further injection mould, substantially all over with a transparent curing casting compound in an RIM method and is coated to form a continuous transparent surface layer (1) with a thickness of at least 0.1 mm over substantially the entire functional unit (11), membrane regions (6) which are flexible at least in places being formed in the region of the recesses (13);
iv) control elements (7) and/or display elements (9) are inserted into the recesses (13) and joined to the plastics support (5).

2. Method according to Claim 1, **characterized in that** the plastics film (3) is printed and/or decorated before or after step i), preferably on the first and/or the second side, preferably using a screen printing method, a laser printing method, a stamp printing method, a spray printing method, an offset printing method or a digital printing method.

3. Method according to one of the preceding claims, **characterized in that** the plastics film (3) is converted at least in places by step ii) into a three-dimensional surface shape and stabilized in said shape.

4. Method according to one of the preceding claims, **characterized in that** the control element (7) is preferably a switch with tactile feedback.

5. Method according to one of the preceding claims, **characterized in that** the display element (9) is an LCD display, preferably a touch-sensitive display.

6. Method according to one of the preceding claims, **characterized in that** the functional unit (11) comprises both at least one control element (7) in the form of a switch with tactile feedback and at least one display element (9), preferably a resistive or capacitive touch-sensitive display element.

7. Method according to one of the preceding claims, **characterized in that** the plastics film (3) is a plastics film of TPU or of polyamide, preferably of polyamide 6 or polyamide 12.

8. Method according to one of the preceding claims, **characterized in that** the casting compound for forming the surface layer (1) is a transparent polyurethane resin which cures in the presence of a curing agent or is self-curing and/or hot-curing, said resin having a thickness at least in the region of the control elements (7) and the membrane regions (6) arranged at least in part therearound of no more than 0.4 mm, and the surface layer (1) preferably having a thickness in these regions of at least 0.1 mm or at least 0.2 mm.

9. Method according to one of the preceding claims, **characterized in that** after step ii) the blank is printed at least in places, preferably using a method according to Claim 2, and/or decorated and/or subjected to laser marking.

10. Multifunctional functional unit (11) produced using a method according to any of claims 1-9 with at least one control element (7) and preferably at least one display element (9), **characterized by** a plastics film (3) of a thickness in the range of 0.05-0.4 mm directly back-injected on a first side with a hard plastics support (5) which is continuous apart from at least two recesses (13), which film comprises on the second, opposite side, a direct, substantially continuous transparent surface layer (1) of a cured casting compound, wherein at least one control element (7) in the form of a switch (7) with tactile feedback is arranged in at least one of the recesses (13), around which element there is arranged an at least partially circumferential flexible membrane region (6) for allowing the button stroke, in which region the flexible multilayer structure consists only of optionally printed plastics film (3) and surface layer (1).

11. Functional unit (11) according to the preceding Claim 10, **characterized in that** it comprises at least one display element (9), and **in that** the at least one control element (7) and the at least one display element (9) are fixed to a common printed circuit board (10), which is fixed to the hard plastics support (5), all the control elements (7) and display elements (9) of the entire functional unit (11) preferably being arranged on a single common printed circuit board (10)

12. Functional unit (11) according to one of preceding Claims 10-11, **characterized in that** regions (2) which protrude at least in part above the surface of the casting compound are formed on the surface, in particular in the regions of the control elements (7).

13. Functional unit (11) according to one of preceding Claims 10-12, **characterized in that** the hard plastics support (5) and/or a printed circuit board on which control elements (7) and/or display elements (9) are arranged comprises light guides, light sources, and/or light shields.

14. Functional unit (11) according to one of preceding Claims 10-13, **characterized in that** it is a console element for a vehicle, a steering wheel for a vehicle, a medical device, a computer mouse, a games console or an operator interface for a mobile telephone or desk telephone.

## Revendications

1. Procédé de fabrication d'un support fonctionnel multifonctions (11) avec une structure de support rigide (5), dans laquelle des éléments de commande (7) et/ou des éléments d'affichage (9) sont disposés derrière une couche de surface transparente fermée (1) sur essentiellement la totalité du support fonctionnel, dans lequel
i) on dépose une feuille de matière plastique plate, flexible et au moins localement transparente (3) avec une épaisseur de l'ordre de 0,05 à 0,4 mm et on découpe en option dans celle-ci au moins un trou de positionnement (12);
ii) on pose la feuille de matière plastique plate (3) en position exacte, de préférence en utilisant ledit au moins un trou de positionnement (12), dans un moule de coulée par injection muni d'un moyen de positionnement correspondant, de préférence à engager dans le trou de positionnement (12), et on effectue une injection à l'arrière de la feuille en matière plastique (3) avec formation d'un support en matière plastique dur (5) essentiellement continu formant la structure de support rigide sur le premier côté, dans lequel le moule de coulée par injection est configuré de telle manière que la feuille en matière plastique (3) ne reçoive pas d'injection au moins localement dans la région des éléments de commande (7) et/ou des éléments d'affichage (9) et y reste libre sous la forme d'au moins deux découpes (13);
iii) sur le deuxième côté opposé au premier côté, on submerge la feuille en matière plastique (3) essentiellement entièrement avec une masse de moulage dure transparente selon un procédé RIM, dans le même moule ou après transfert de l'ébauche dans un autre moule de coulée par injection, dans cet autre moule de coulée par injection et on la recouvre en formant une couche de surface transparente fermée (1) avec une épaisseur d'au moins 0,1 mm sur essentiellement la totalité du support fonctionnel (11), dans lequel il se forme des zones de membrane flexibles (6) au moins localement dans la région des découpes (13);
iv) on pose des éléments de commande (7) et/ou des éléments d'affichage (9) dans les découpes (13) et on les assemble au support en matière plastique (5).

2. Procédé selon la revendication 1, **caractérisé en ce que** l'on imprime et/ou on décore la feuille en matière plastique (3), avant ou après l'étape i), de préférence sur le premier et/ou le deuxième côté, de préférence par un procédé d'impression par sérigraphie, un procédé d'impression au laser, un procédé d'impression au tampon, un procédé d'impression par pulvérisation, un procédé d'impression offset ou un procédé d'impression numérique.

3. Procédé selon l'une quelconque des revendications précédentes, **caractérisé en ce que** l'on transforme la feuille en matière plastique (3) par l'étape ii) au moins localement en une forme de surface tridimensionnelle et on la stabilise dans celle-ci.

4. Procédé selon l'une quelconque des revendications précédentes, **caractérisé en ce que** l'élément de commande (7) est un commutateur à réponse tactile.

5. Procédé selon l'une quelconque des revendications précédentes, **caractérisé en ce que** l'élément d'affichage (9) est un écran LCD, de préférence un écran sensitif.

6. Procédé selon l'une quelconque des revendications précédentes, **caractérisé en ce que** le support fonctionnel (11) présente aussi bien au moins un élément de commande (7) sous la forme d'un commutateur à réponse tactile qu'au moins un élément d'affichage (9), de préférence un élément d'affichage sensitif résistif ou capacitif.

7. Procédé selon l'une quelconque des revendications précédentes, **caractérisé en ce que** la feuille en matière plastique (3) est une feuille en matière plastique en TPU ou en polyamide, de préférence en polyamide 6 ou en polyamide 12.

8. Procédé selon l'une quelconque des revendications précédentes, **caractérisé en ce que** la masse de moulage pour la formation de la couche de surface (1) est une résine de polyuréthane transparente, autodurcissable et/ou thermodurcissable, dans lequel celle-ci présente, au moins dans la région des éléments de commande (7) et des zones de membrane (6) disposées au moins partiellement autour de ceux-ci, une épaisseur de pas plus de 0,4 mm, et dans lequel la couche de surface (1) présente de préférence dans ces régions une épaisseur d'au moins 0,1 mm ou d'au moins 0,2 mm.

9. Procédé selon l'une quelconque des revendications précédentes, **caractérisé en ce qu'**après l'étape ii), on imprime au moins localement l'ébauche, de préférence en utilisant un procédé selon la revendication 2, et/ou on la décore et/ou on lui applique une inscription au laser.

10. Support fonctionnel multifonctions (11) fabriqué par un procédé selon l'une quelconque des revendications 1 à 9 avec au moins un élément de commande (7) et de préférence au moins un élément d'affichage (9), **caractérisé par** une feuille en matière plastique (3) d'une épaisseur de l'ordre de 0,05 à 0,4 mm, dotée par injection à l'arrière directement et immédiatement sur un premier côté d'un support en matière plastique dur continu (5) jusqu'au moins deux découpes (13), qui présente sur le deuxième côté opposé une couche de surface immédiate, transparente essentiellement fermée (1) en une masse de moulage durcie, dans lequel au moins un élément de commande (7) sous la forme d'un commutateur (7) à réponse tactile est disposé dans au moins une des découpes (13), autour duquel il se trouve une zone de membrane flexible (6) au moins partiellement périphérique pour permettre la levée de la touche, dans laquelle la structure de couche flexible ne se compose que de la feuille en matière plastique éventuellement imprimée (3) et de la couche de surface (1).

11. Support fonctionnel (11) selon la revendication 10, **caractérisé en ce qu'**il présente au moins un élément d'affichage (9), et **en ce que** ledit au moins un élément de commande (7) et ledit au moins un élément d'affichage (9) sont fixés sur une plaquette de circuits imprimés commune (10), qui est fixée sur le support en matière plastique dur (5), dans lequel de préférence tous les éléments de commande (7) et les éléments d'affichage (9) de tout le support fonctionnel (1) sont disposés sur une seule plaquette de circuits imprimés commune (10).

12. Support fonctionnel (11) selon l'une quelconque des revendications précédentes 10 à 11, **caractérisé en ce que** des régions (2) composées de la masse de moulage faisant au moins partiellement saillie sur la surface sont formées sur la surface, en particulier dans les régions des éléments de commande (7).

13. Support fonctionnel (11) selon l'une quelconque des revendications précédentes 10 à 12, **caractérisé en ce que** le support en matière plastique dure (5) et/ou une plaquette de circuits imprimés, sur laquelle des éléments de commande (7) et/ou des éléments d'affichage (9) sont disposés, présente des guides d'ondes lumineuses, des sources de lumière, et/ou des dispositifs de protection contre la lumière.

14. Support fonctionnel (11) selon l'une quelconque des revendications précédentes 10 à 13, **caractérisé en ce qu'**il est un élément de console pour un véhicule, un volant de direction pour un véhicule, un dispositif médical, une souris informatique, une console de jeux ou une surface pour un téléphone mobile ou un poste téléphonique fixe.
